# EUROPEAN PATENT SPECIFICATION

(11) **EP 3 875 355 B1**
(45) Date of publication and mention of the grant of the patent: **02.08.2023**
(21) Application number: 21158339.8
(22) Date of filing: 22.02.2021
(51) Int. Cl.: B62K 3/00, B62K 15/00, B62K 21/12, B62K 21/22, B62K 25/04, B62J 25/04, B62J 50/10, B62J 43/10, B62J 43/20, B62K 19/40, B62K 23/02

(54) **FOLDABLE ELECTRIC SCOOTER**
FALTBARER ELEKTRISCHER ROLLER
TROTTINETTE ÉLECTRIQUE PLIABLE

(30) Priority: 24.02.2020 IT 202000003766
(43) Date of publication of application: 08.09.2021
(73) Proprietor: Linkable S.r.l., 38121 Trento (IT)
(72) Inventor: GUIDETTI, Francesco, I-38121 Trento (IT); PESENTI, Federico, I-38121 Trento (IT)
(74) Representative: Leihkauf, Steffen Falk

(56) References cited:
- WO-A1-2008/119250
- WO-A1-2015/021812
- CN-U- 205 396 412
- CN-U- 206 049 922
- DE-U1- 20 104 211

## Description

### Field of the invention

The present invention relates to an electric scooter with two wheels, which can be folded from an expanded configuration, suitable for being used as an individual means of transport, into a compacted configuration, suitable for a more convenient transport and storage of the scooter.

### Background art

Scooters are a convenient and light individual means of transport, which allows users to get around the city easily and cross areas of the city, where the use of other means of transport is prohibited, such as, for example, areas with limited traffic or pedestrianized areas.

Such areas where it is possible to use scooters (roads, pavements, parks) are often spaced apart with areas where it is not possible or inopportune to use scooters (buildings, means of public transport), therefore the user is invited to get off the scooter, pick it up, carry it and put it back, often in conditions of limited space.

For example, it is often forbidden, or at least, ill-advised, to carry bulky objects in the subway, especially during the rush hour.

Amongst other things, the integration of an electric propulsion system in scooters has also recently led to a significant increase in such individual means of transport.

For some disadvantages of use, which have not been overcome yet, scooters or electric scooters of the prior art are still not fully suitable as a means of transport for the so-called "last kilometer", i.e. for the journey from the car park or from the stop of the means of public transport to the final destination (office, school, home, shop,...) or, vice versa, from the point of departure (home, office, restaurant, ...) to the car park or the stop of the means of public transport.

In this context, the need is felt to provide a scooter having, on the one hand, dimensional features and proportions, which are suitable for a use thereof as an individual safe and ergonomic means of transport, and, on the other, which is foldable into a manageable compacted configuration, which is easy to carry and store, also in conditions of limited space.

A particular problem of the prior art, which has not been solved yet is given by the conflicting needs for a long and wide support platform to provide an adequate support for the user's feet and a compaction not only with highly reduced dimensions, but also with a compact shape, which is adapted for the needs of transport and storage.

A further particular problem of the prior art, which has not been solved yet is the presence of a large, unused empty space, between the wheels and the fact that the wheels project outside the remaining profile of the scooter, making the latter bulky and difficult to carry and store, for example, in the trunk of a car.

A further particular problem of the prior art, which has not been solved yet, is the unbalanced distribution of the masses of the battery and the electric motor, both when driving the scooter in the expanded configuration, and when manually carrying the scooter in the compact configuration.

CN205396412U discloses a foldable electric scooter according to the preamble of claim 1. Additional foldable electric scooters are known from each of WO2008/119250A1, WO2015/021812A1 and CN206049922U.

### Summary of the invention

Therefore, it is the object of the present invention to provide a scooter having such features as to overcome at least some of the drawbacks of the prior art.

It is a particular object of the invention to improve the compact configuration of the scooter with reduced dimensions and a more regular shape, which is better adapted to the manual transport of the scooter and the storage thereof in conditions of limited space.

A further particular object of the invention is that of combining the conflicting needs for a wide support platform and compaction of the scooter with highly reduced dimensions (particularly in width) and a compact shape, adapted for the needs of transport and storage.

Further particular objects of the invention include exploiting the thus-far unused empty space between the two wheels and giving the compact scooter a more regular profile, which is adapted for transport and storage, for example, in the trunk of a car.

A further particular object of the invention is to obtain a more balanced distribution of the masses of the battery and the electric motor, both when driving the scooter in the expanded configuration, and when manually carrying the scooter in the compacted configuration.

These and further objects are achieved by means of a scooter according to claim 1.

Preferred and advantageous embodiments are the subject of the dependent claims.

### Brief description of the drawings

To better understand the invention and appreciate the advantages thereof, a description is provided below of some non-limiting exemplary embodiments of the scooter, with reference to the figures, wherein:
- figures 1 and 2 are perspective views of a foldable scooter according to the invention, in the expanded configuration of use;
- figure 3 is a side view of the scooter in figure 1,
- figures 4 and 5 are perspective and side views of the scooter in figure 1 in the folded and compacted configuration;
- figure 6 is a perspective view showing a step and structure of partial compaction of the scooter according to an embodiment,
- figure 7 is a perspective view showing further steps and structural features of partial compaction of the scooter according to an embodiment,
- figure 8 is a partially transparent and diagrammatic side view, of the scooter in the compaction step, according to an embodiment,

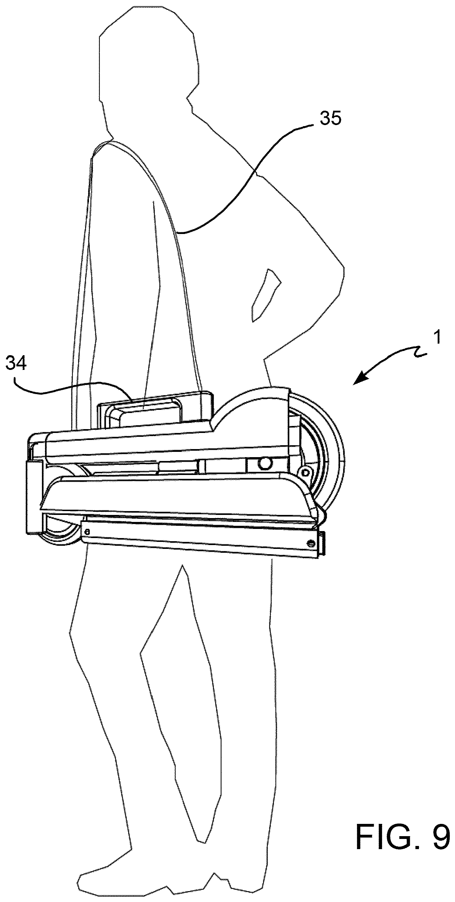

- figure 9 shows an example of manual transport of the compacted scooter according to an embodiment.

### Description of embodiments

With reference to the figures, a foldable scooter is globally denoted with reference numeral 1.

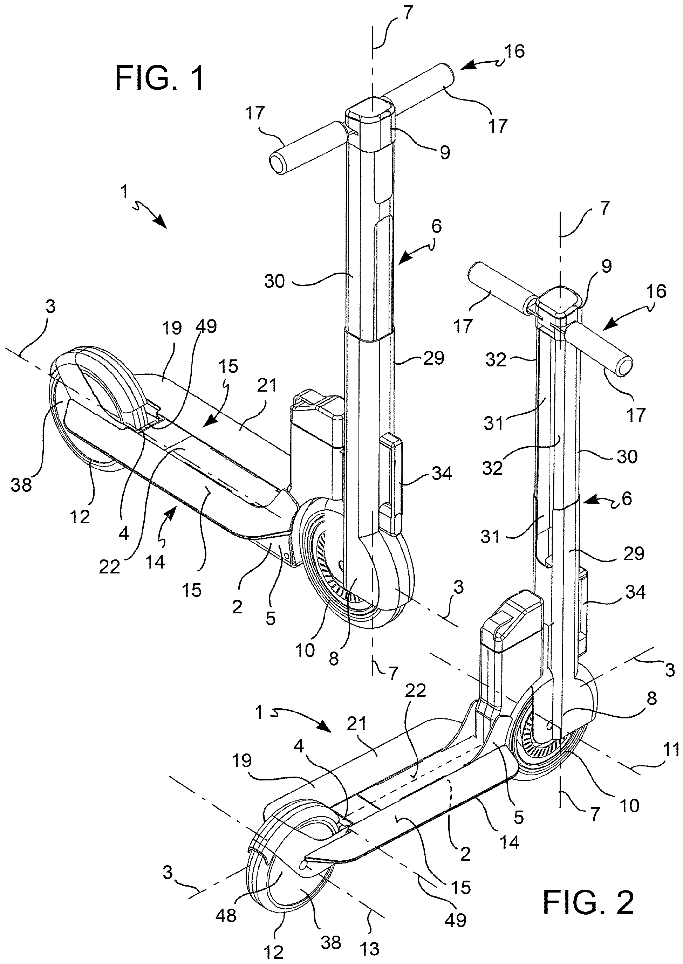

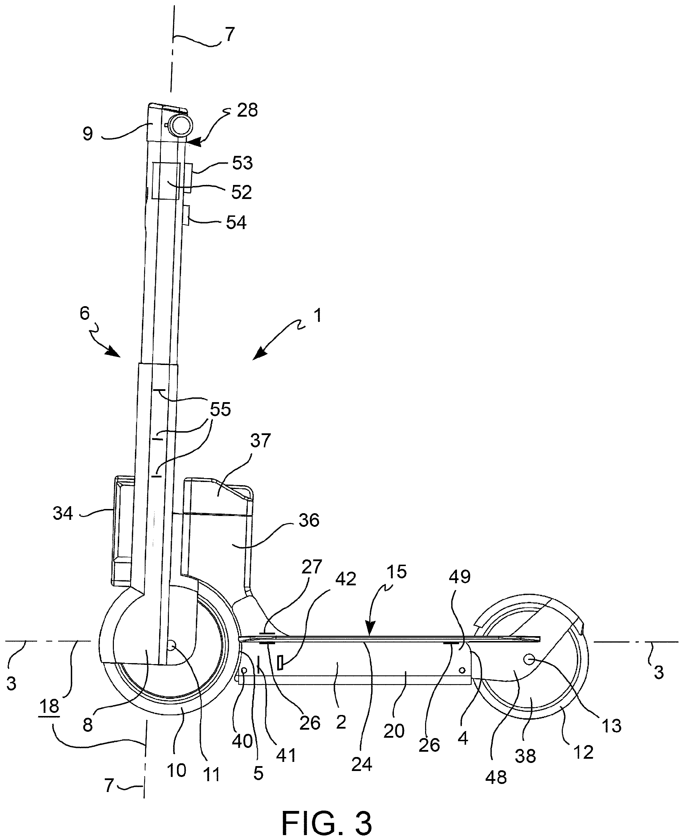

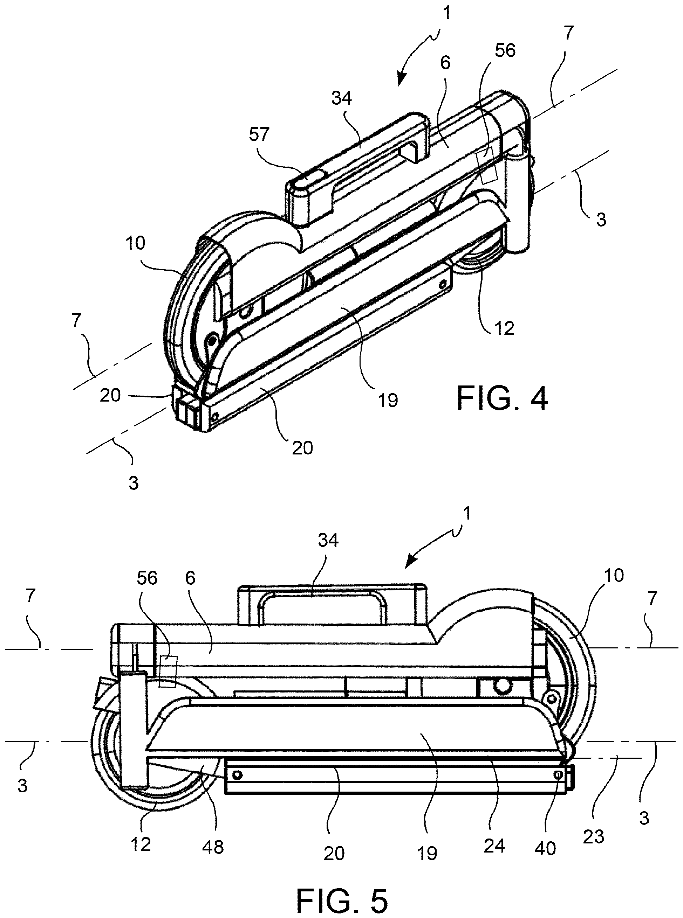

The foldable scooter 1 comprises:
- an elongated beam-shaped frame 2 extending along a longitudinal axis 3 of the scooter 1 from a rear frame end 4 to a front frame end 5,
- an elongated column-shaped upright 6, connected to the frame 2 and extending along an upright axis 7 from a lower upright end 8, arranged at the front frame end 5, to a free upper upright end 9,
- a front wheel 10 arranged at the lower upright end 8 and rotating about a front rotation axis 11 transversal to the longitudinal axis 3 and to the upright axis 7,
- a rear wheel 12 arranged at the rear frame end 4 and rotating about a rear rotation axis 13 transversal, preferably perpendicular, to the longitudinal axis 3 and to the upright axis 7,
- a plate-shaped platform 14 connected to the frame 2 and forming a treadable surface 15 extending between the front wheel 10 and the rear wheel 12 to support a user standing on the platform 14,
- a handlebar 16 connected to the upright 6 and forming one or more gripping portions 17 grippable by the user and, optionally, operatively connected to the front wheel 10 to adjust the orientation of the front rotation axis 11 with respect to the longitudinal axis 3 to allow a steering of the scooter 1,
   wherein the upright 6 can be tilted with respect to the frame 2 from an unfolded configuration of use (figures 1-3), in which the upright axis 7 is oriented transversely to the longitudinal axis 3 (for example, mutually defining an opening angle from 75° to 105°) and jointly defining an upright guide plane 18, and a compacted transport configuration (figures 4,5), in which the upright 6 is folded on the frame 2 with the upright axis 7 extending from the front wheel 10 towards the rear wheel 12.

According to the invention, the platform 14 can be tilted with respect to the frame 2 between a position of use expanded transversely to the guide plane 18 and a transport position close or parallel to the guide plane 18.

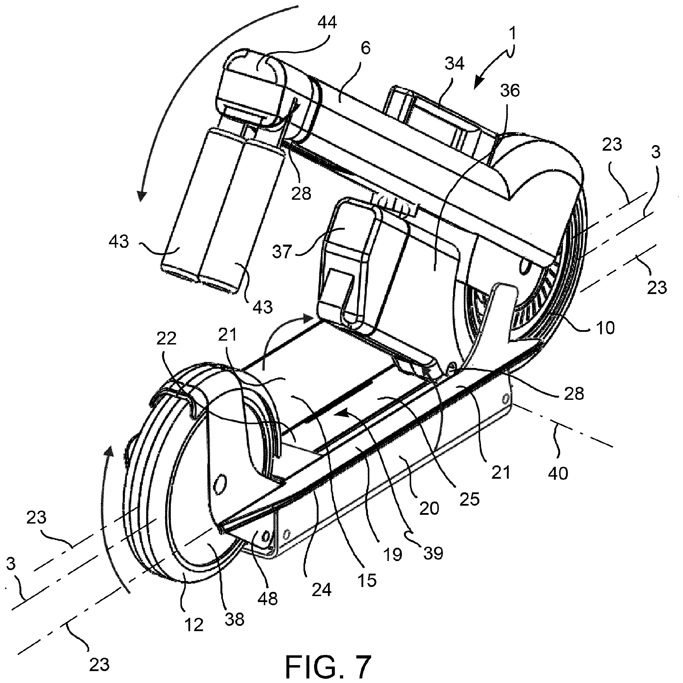

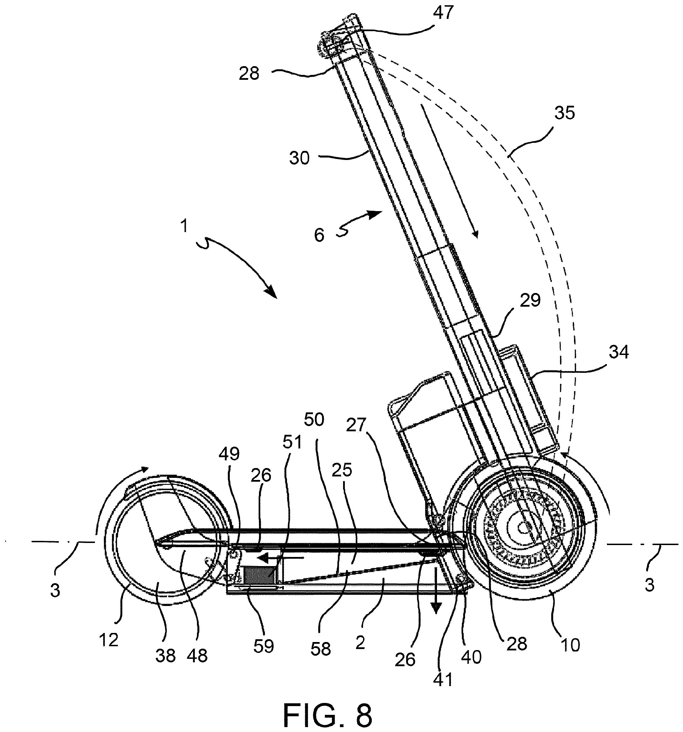

During the tilting of the platform 14 from the position of use to the transport position, the platform 14 opens a gap 39 in the treadable surface 15 between the front wheel 10 and the rear wheel 12, which accommodates at least one portion of the upright 6 tilted in the transport configuration (figures 7,8).

In the configuration of use of the scooter 1 this ensures wide and ergonomic dimensions, both in the guide plane 18 and transversely to the guide plane 18, allowing, in the transport configuration, a compaction of the scooter 1 not only in the guide plane 18, but, in particular, also in the direction transversal to the guide plane 18. The reception of at least a part of the upright 6 in the otherwise unused space between the two wheels 10,12, and thus far inaccessible due to the treadable surface 15 of the platform 14, allows a further approximation and an at least partial interpenetration of the upright 6 with the frame 2. The tilting of the platform 14 allows a very wide making thereof which is comfortable for the user when driving the scooter 1 and a reduction in the width thereof when the scooter 1 is compacted in the transport configuration thereof.

### Detailed description of the platform 14

In accordance with an embodiment, the platform 14 comprises two elongated plates 19, both connected to the frame 2 and rotating with respect to the frame 2 about respective platform rotation axes 23, preferably parallel to the longitudinal axis 1, in the expanded position of use and in the approximated transport position.

Advantageously, the frame 2 comprises two parallel longitudinal walls 20, spaced apart and facing each other, and extending in the direction of the longitudinal axis 3. Each of the two elongated plates 19 is hinged to one of the longitudinal walls 20, respectively, at an upper edge 24 of the longitudinal wall 20 and can have an outer plate portion 21 and an inner plate portion 22 extending on two opposite sides with respect to the platform rotation axis 23 of the plate 19. Preferably, the platform rotation axis 23 extends along the upper edge 24 of the longitudinal wall 20.

In the expanded position of use, the two plates 19 are mutually aligned on one same support plane (which is not necessarily perfectly planar) and jointly form the treadable surface 15 facing an upper side of the scooter 1. In the position of use, the treadable surface 15, transversal, for example, orthogonal to the guide plane 18, is possibly planar. In the transport position, the two plates 19 are arranged next to each other and oriented on planes transversal to the support plane and spaced apart from each other, for example, on planes parallel to the guide plane 18. In other words, in the position of use, the two plates 19 are mutually aligned on one same substantially horizontal support plane, while in the transport position the two plates 19 are oriented substantially vertically and substantially parallel to the guide plane 18.

According to an embodiment, in the expanded position of use, the inner portions 22 of the plates 19 close a space 25 from above between the two longitudinal walls 20 and, in the transport position, the inner portions 22 of the plates 19 open the aforesaid gap 39 in the treadable surface 15 between the rear wheel 12 and the front wheel 10, to allow parts of the upright 6 to be at least partially accommodated in the otherwise unused space 25.

Advantageously, the plates 19 of the platform 14 can be tilted from the position of use to the transport position by means of a counter rotation of the outer portions 21 thereof upwards and towards one another, and of the inner portions 22 thereof downwards and away from one another. Thus, the gap 39 opens downwards and in the same tilting direction as the upright 6 on the frame 2, facilitating both the movements and partial interpenetration of the upright 6 with the frame 2. Furthermore, thus, the plates 19 of the platform 14 are also positioned in the transport position, at least partially in the space 25 between the two longitudinal walls 20 of the frame 2, further reducing the width of the compacted scooter 1.

The platform 14 can be locked in the expanded position of use by means of one or more first support surfaces 26, preventing an opening rotation of the platform 14 or of the plates 19 beyond the expanded position of use, as well as by means of one or more stop members 27, preventing the tilting of the platform 14 or of the plates 19 from the expanded position of use towards the transport position, in which the stop members 27 can be manually or electrically deactivated, for example, by means of a release mechanism 28, which will be described below.

The support surfaces 26 can be formed by front support portions of the frame 2 against which a front portion of the platform 14 or the plates 19 is positioned, and by rear support portions of the frame 2 against which a rear portion of the platform 14 or the plates 19 is positioned. This ensures a safe and stable support for the user on the whole length of the platform 14.

The stop members 27 can comprise one or more pins or stop latches movably supported by the frame 2 between a position of engagement with the platform 14 or the plates 19 and a position of disengagement with respect to the platform 14 or the plates 19.

The frame 2 can be made, for example, of aluminum or of a fiber-reinforced composite material, for example, carbon fibers or glass fibers. The platform 14 can be made, for example, of aluminum, of a fiber-reinforced composite material, for example, carbon fibers, glass fibers, kevlar, or of wood.

According to a further embodiment, at least a part of the platform 14 is made of a flexible sheet, for example, a foldable, but not extensible fabric, which is reinforced, for example, or made by means of carbon fibers, wherein, in the position of use of the platform 14 the flexible sheet is stretched and forms at least a part of the treadable surface 15.

More advantageously, the platform 14 or flexible sheet interact with the battery coupling interface 36 so that during the tilting of the upright 6 on the frame 2, the battery coupling interface 36 pushes against the platform 14 or pulls the flexible sheet, forcing the platform portions into the vertical transport position.

According to a further embodiment, the longitudinal length of the treadable surface 15 is greater than 90% of the wheelbase (distance between the front rotation axis 11 and the rear rotation axis 13), preferably greater than 95% of the wheelbase, for example, substantially equal to the wheel base. Particularly advantageously, the platform 14 forms a rear bifurcate portion, centrally accommodating at least part of the rear wheel 12, embracing it on two opposite sides. This makes the scooter one usable by people of a very different stature and allows users to take different postures, for example, with the possibility of driving with the feet together for greater ergonomics of a balanced and symmetrical posture and for greater driving stability. In fact, an electric scooter does not require the traditional posture with only one foot resting on the platform and with the other foot at the side next to the scooter to provide the thrust against the road surface.

### Detailed description of the upright 6

According to an embodiment, the upright 6 comprises a lower upright portion 29, which supports the front wheel 10, and an upper upright portion 30, which supports the handlebar 16. The lower upright portion 29 and the upper upright portion 30 are connected to each other in a translatable manner, for example, telescopically, to allow the length of the upright 6 and/or a movement thereof to be adjusted between an elongated position of use (figures 1-3) and a shortened transport position (figures 4,7).

According to an embodiment, the upright 6 forms a cavity or passage opening 31, which is open in the direction of the frame 2 and which accommodates at least part of the rear wheel 12 or of the frame 2 when the upright 6 is tilted on the frame 2 in the transport configuration (figure 5).

Advantageously, both the lower upright portion 29 and the upper upright portion 30 each form two opposite and spaced apart side walls 32, which are mutually telescopically engaged, jointly delimiting an inner space 33 of the upright 6. A part of the inner space 33 can accommodate the part of the rear wheel 12 or of the frame 2 in the transport configuration and a further part of the inner space 33 can accommodate, for example, the release mechanism 28.

The elongated position or position adjusted in length of the upright 6 can be locked, for example, by means of one or more stop members 55, for example, one or more stop pins, which are supported and movable between an engagement position, in which they both engage the lower 29 and upper upright portions 30, locking the relative position thereof, and a disengagement position, in which they allow a relative sliding of the lower 29 and upper upright portions 30.

In order to facilitate the transport of the compacted scooter 1, the upright 6, preferably the lower portion 29 and preferably on a front side of the upright 6 facing the direction of travel of the scooter 1, forms a handle 34 for manually transporting the scooter 1. Preferably, the handle 34 is a rigid handle.

More advantageously, the scooter 1 can comprise a flexible belt or a strap 35 connected with an upper end thereof to the upper upright portion 30 and with a lower end thereof to the lower upright portion 29, so as to be stretched and adhered to the upright 6 in the elongated position and so as to be loosened and usable as a strap when the upright 6 is in the shortened position (figure 8).

According to an embodiment, the upright 6, preferably the lower upright portion 29, further forms a battery housing 36 or a battery coupling interface 36 for a mechanical and electrical connection of a battery 37 to the scooter 1. The battery coupling interface 36 can be integral with the lower upright portion 29 or movable with respect thereto, for example, to facilitate the coupling and removal of the battery 37.

Advantageously, the battery 37 is connected to the scooter 1 at the front frame end 5 and the lower upright end 8, while an electric actuation motor 38 is arranged at the rear frame end 4, preferably integrated into the rear wheel 12. This arrangement of the battery 37 and the electric motor 38 positions the center of gravity of the scooter 1 (in the configuration of use) downwards and in an at least approximately intermediate region between the front wheel 10 and the rear wheel 12, similar or close to the position of the user standing on the platform 14, contributing to a good maneuverability and driving stability of the scooter 1.

In the compacted transport position of the scooter 1, the handle 34 is positioned in a region half way between the front wheel 10 and the rear wheel 12 and on an outer, upper side of a stack consisting of both upper 30 and lower upright portions 29, telescopically overlapping each other, the frame 2 and the battery 37. This configuration concentrates the weight of the compacted scooter 1 beneath the handle 34, significantly facilitating the manual transport by means of the handle 34 or by means of the shoulder strap 35.

According to an embodiment, the part of the upright 6 accommodated in the space 25 between the longitudinal walls 20 through the gap 39 (with the upright 6 tilted on the frame 2) comprises at least part of the battery 37 and/or of the battery housing 36.

According to an embodiment, the upright 6 and front wheel 10 assembly is rotatable with respect to the frame 2 about an upright tilting axis 40 spaced apart from the front rotation axis 11 in the direction of the frame 2, so that the tilting of the upright 6 on the frame 2 moves the front wheel 10 towards an upper side and towards a central region of the frame 2. This movement of the front wheel 10 with respect to the frame 2 gives the scooter 1, in the transport configuration, a less irregular outer profile, reducing the longitudinal length thereof.

The upright 6 can be locked with respect to the frame 2 in the position of use by means of one or more second support surfaces 41, preventing an opening rotation of the upright 6 beyond the position of use, as well as by means of one or more stop members 42, preventing the tilting of the upright 6 from the position of use towards the transport position, in which the stop members 42 can be manually or electrically deactivated, for example, by means of a release mechanism, which can be the same release mechanism 28 of the platform 14.

The second support surfaces 41 can be formed by support portions of the frame 2 against which a corresponding counter-support portion of the upright 6 is positioned.

The stop members 42 can comprise one or more pins or stop latches, which are movably supported by the frame 2 between a position of engagement with the upright 6 and a position of disengagement with respect to the upright 6.

The upright 6 can be made, for example, of aluminum or of a fiber-reinforced composite material, for example, carbon fibers or glass fibers.

### Detailed description of the handlebar 16

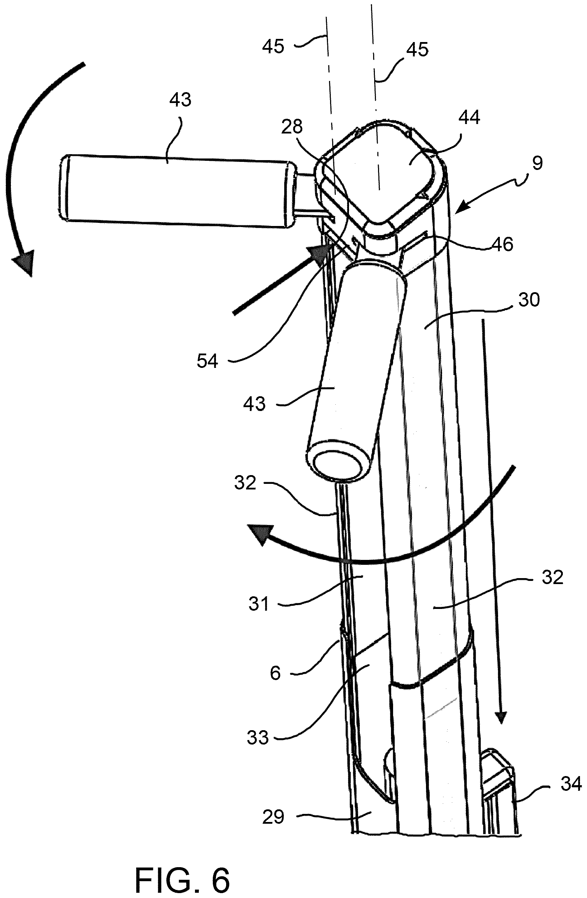

According to an embodiment, the handlebar 16 comprises two elongated half-handlebars 43, each having a first free end and a second end rotatably connected to a central handlebar portion 44 about a handlebar folding axis 45, preferably parallel to the upright axis 7, to allow the handlebar 16 to fold between an open position of use (figures 1,2) and a close transport position (figures 6,7).

The half-handlebars 43 can be locked with respect to the central handlebar portion 44 in the open position of use by means of one or more third support surfaces 46, preventing an opening rotation of the half-handlebars 43 beyond the open position of use, as well as by means of one or more stop members 47, preventing the closing rotation of the half-handlebars 43 from the open position of use towards the close transport position, in which the stop members 47 can be manually or electrically deactivated, for example, by means of a release mechanism, which can be the same release mechanism 28 of the platform 14 and the upright 6.

The third support surfaces 46 can be formed by support portions of the central handlebar portion 44 against which a corresponding counter-support portion of the half-handlebars 43 is positioned.

The stop members 47 can comprise one or more pins or stop latches movably supported by the central handlebar portion 44 between a position of engagement with the half-handlebars 43 and a position of disengagement with respect to the half-handlebars 43.

According to a further embodiment, each of the two half-handlebars 43 can be adjustable in length, for example, telescopically, for example, having two mutually inserted tubular portions, which are axially sliding and lockable in a plurality of relative positions by means of snap-on or screw stop members, which are known per se and therefore not described in further detail.

In the transport position of the scooter 1, the half-handlebars 43 can be arranged on only one side next to the rear wheel 12 or they can embrace the rear wheel 12 on two opposite sides (figure 5).

According to embodiments, the central handlebar portion 44 can be directly formed by the (the upper upright portion 30 of the) upright 6 so that during a steering, the whole upright 6 rotates about the upright axis 7, or the central handlebar portion 44 can be rotatably supported by a stationary portion of the upright 6 so that during a steering, only the handlebar 16 and the front wheel 10 are oriented with respect to the stationary portion of the upright 6.

### Detailed description of the rear wheel 12 support

According to an embodiment the rear wheel 12, which preferably integrates the electric actuation motor 38, is mounted to a wheel support 48 and rotatable, or rotationally operable by means of the electric motor 38, with respect to the wheel support 48 about the rear rotation axis 13. The wheel support 48, in turn, is tiltably connected to (the longitudinal walls 20 of) the frame 2 about an oscillation axis 49, parallel to the rear rotation axis 13 and spaced apart from the rear rotation axis 13 towards the front frame end 5 and, preferably, also towards a lower frame side 2, so as to allow a movement of the wheel support 48 with the rear wheel 12 from a position of use thereof towards an upper side of the frame 2 and, preferably also towards the front end 5 of the frame 2, in a raised transport position thereof (figures 7,8).

According to an embodiment, the wheel support 48 is connected to the upright 6 by means of a transmission mechanism 50 configured so that the tilting of the upright 6 on the frame 2 moves the rear wheel 12 towards an upper side and, preferably, towards a central region of the frame 2. This movement of the rear wheel 12 with respect to the frame 2 gives the scooter 1, in the transport configuration, a less irregular outer profile, reducing the longitudinal length thereof.

The transmission mechanism 50 can comprise, for example, a lever mechanism or a mechanism with a tie-rod, with a cable, with a connecting rod connected to the lower end 8 of the upright 6 in an eccentric position with respect to an upright tilting axis 40, as well as to the wheel support 48 in an eccentric position with respect to the oscillation axis 49.

The transmission mechanism 50 can further comprise a shock-absorber block 51, for example, made of an elastomeric material, which allows the wheel support 48 in the position of use (lowered) a dampened tilting movement, with limited width.

According to an embodiment, the shock absorber block 51 (preferably supported on a slide 59) can be connected between a connecting rod 58 acting as a pull-push rod, and the wheel support 48 so that during the driving of the scooter 1 the connecting rod 58 is stretched, forming the suspension for the rear wheel 12, and during the compaction of the scooter 1 the connecting rod 58 acts as a push rod pushing the wheel support 48 with the rear wheel 12 towards the transport position thereof.

Advantageously, the front wheel 10 has a greater diameter than the diameter of the rear wheel 12, for example, the diameter of the front wheel 10 can be 25,4 cm (10 inches), while the diameter of the rear wheel can be 17,78 cm (7 inches) or 21,59 cm (8.5 inches). This gives the scooter 1 greater stability during travel, increased comfort in the event of dips and typical road irregularities, making it easier to overcome obstacles and interruptions in the road surface, tracks, etcetera.

### Detailed description of the actuation of the electric motor 38

The scooter one can comprise an electric or electronic control system 52 connected to the battery 37 and to the electric motor 38 and having an actuation member 53, for example, a button or a small lever, preferably positioned at the handlebar 16 or the upright 6, for switching the electric motor 38 on and off and possibly for adjusting the rotation speed of the actuated wheel.

### Detailed description of the release mechanism 28

According to an embodiment, the release mechanism 28 comprises a release member 54, which is operable by the user and in functional connection with one or more of the platform stop members 27, upright stop members 42,55, handlebar stop members 47, so as to be able to disengage said stop members 27,42,47, selectively and individually, or simultaneously or in sequence.

According to an embodiment, the release member 54 is configured to allow a simultaneous disengagement or disengagement in sequence of all stop members to allow the scooter 1 to fold from the configuration of use thereof into the compacted transport configuration, while the stop members 27,42,47, in turn, are elastically biased towards the engagement position thereof so that they automatically lock the single components of the scooter 1 on reaching the corresponding positions of use.

According to a further embodiment, the release member 54 is configured to allow the disengagement of the handlebar stop members 47 and
- the movement of the half-handlebars 43 into the transport position thereof disengages the stop members 55 of the upright 6, allowing the telescopic shortening thereof, and/or
- the shortening movement of the upright 6 or the aforesaid movement of the half-handlebars 43 disengages the upright stop members 42, allowing the upright 6 to tilt on the frame 2, and
- this tilting of the upright 6 on the frame 2 disengages the platform stop members 27 and interacts with the platform 14, moving it into the transport position thereof.

### Description of the hooking mechanism 56

The scooter 1 further comprises a hooking mechanism 56 configured to lock the scooter 1 in the compacted transport position, in particular, for hooking the upright 6 to the frame 2 and for keeping the platform 14 in the transport position.

According to an embodiment, the hooking mechanism 56 comprises hooking means formed at the upright 6 and the frame 2 or at the wheel support 48 and configured to be automatically engaged, for example, by snapping on, when the upright 6 reaches the transport position thereof.

The platform 14 can be kept in the transport position by means of a support thereof against a portion of the upright 6, which interferes with a movement trajectory of the platform 14 from the expanded position of use towards the close transport position. Furthermore, in order to overcome troublesome vibrations or knocking noises of the plates 19 in the transport position, auxiliary stop means can be comprised, for example, one or more magnets, which keep the platform 14 still.

The hooking mechanism 56 is releasable to allow the scooter 1 to open again, for example, by means of a release member 57 advantageously, but not necessarily arranged at the handle 34.

In the compacted transport configuration, the scooter 1 constitutes a parallelepiped, which can easily be stored in subfloors of trunks and ship holds, it has particularly reduced dimensions and can easily be stacked due to the regular shape of the outer profiles and surfaces.

Thus, in the transport configuration the scooter 1 can be used as a briefcase, and the weight thereof can be further modified or distributed by virtue of the possibility of removing the battery 37 from the battery housing 36.

The battery housing 36 is suitable to accommodate batteries 37 having a different length, weight and charging capacity for different uses, for example, for relatively long journeys or for the so-called last mile.

Clearly, in order to meet specific, contingent needs, those skilled in the art may make further changes and variations to the scooter 1 according to the present invention, all contained in the protective scope of the invention, as defined by the following claims.

## Claims

1. A foldable electric scooter (1) comprising:
- a frame (2) extending along a longitudinal axis (3) of the electric scooter (1) from a rear frame end (4) to a front frame end (5),
- an elongated upright (6), connected to the frame (2) and extending along an upright axis (7) from a lower upright end (8), arranged at the front frame end (5), to a free upper upright end (9),
- a front wheel (10) arranged at the lower upright end (8) and rotating about a front rotation axis (11) transversal to the longitudinal axis (3) and to the upright axis (7),
- a rear wheel (12) arranged at the rear frame end (4) and rotating about a rear rotation axis (13) transversal to the longitudinal axis (3) and to the upright axis (7),
- a platform (14) connected to the frame (2) and forming a treadable surface (15) extending between the front wheel (10) and the rear wheel (12) to support a user standing on the platform (14),
- a handlebar (16) connected to the upright (6) and forming one or more gripping portions (17) which are grippable by the user,
wherein the upright (6) can be tilted with respect to the frame (2) between an unfolded configuration of use, in which the upright axis (7) is oriented transversely to the longitudinal axis (3), jointly defining an upright guide plane (18), and a compact transport configuration, in which the upright (6) is folded on the frame (2) with the upright axis (7) extending from the front wheel (10) towards the rear wheel (12),
wherein the platform (14) can be tilted with respect to the frame (2) between a position of use expanded transversely to the guide plane (18) and a transport position close or parallel to the guide plane (18),
**characterized in that,** when tilting the platform (14) from the position of use to the transport position, the platform (14) opens a gap (39) in the treadable surface (15) between the front wheel (10) and the rear wheel (12), which accommodates at least one portion of the upright (6) tilted in the transport configuration.

2. A scooter (1) according to claim 1, wherein the platform (14) comprises two elongated plates (19), both connected to the frame (2) and rotating with respect to the frame (2) about respective platform rotation axes (23).

3. A scooter (1) according to claim 2, wherein:
- the frame (2) comprises two parallel longitudinal walls (20) which are spaced apart from each other and mutually facing, and extending in the direction of the longitudinal axis (3),
- each of the two elongated plates (19) is hinged to one of the longitudinal walls (20), respectively, at an upper edge (24) of the longitudinal wall (20) and forms an outer plate portion (21) and an inner plate portion (22) extending on two opposite sides with respect to the platform rotation axis (23) of the plate (19),
- in the expanded position of use, the two plates (19) are mutually aligned on the same support plane and jointly form the treadable surface (15) facing an upper side of the electric scooter (1),
- in the transport position, the two plates (19) are arranged next to each other and oriented on planes transversal to the support plane and spaced apart from each other, or on planes parallel to the guide plane (18),
- in the expanded position of use, the inner portions (22) of the plates (19) close a space (25) from above between the two longitudinal walls (20) and, in the transport position, the inner portions (22) of the plates (19) open said gap (39) in the treadable surface (15) to allow parts of the upright (6) to be at least partially accommodated in the space (25).

4. A scooter (1) according to claim 3, wherein the plates (19) of the platform (14) can be tilted from the position of use to the transport position by a counter rotation of the outer portions (21) thereof upwards and towards one another, and of the inner portions (22) thereof downwards and away from one another, so that the gap (39) opens downwards and in the same tilting direction as that of the upright (6) on the frame (2).

5. A scooter (1) according to one of the preceding claims, wherein:
- the upright (6) comprises a lower upright portion (29) which supports the front wheel (10), and an upper upright portion (30) which supports the handlebar (16),
- the lower upright portion (29) and the upper upright portion (30) are connected to each other in a translatable manner to allow the adjustment of the length of the upright (6) and a movement thereof between an elongated position of use and a shortened transport position,
- the upright (6) forms a recess (31), which is open in the direction of the frame (2) and which accommodates at least part of the rear wheel (12) or of the frame (2) when the upright (6) is tilted on the frame (2) in the transport configuration.

6. A scooter (1) according to claim 5, wherein the upright (6) forms a handle (34) for manually transporting the electric scooter (1) and/or the electric scooter (1) comprises a flexible belt (35) connected with an upper end thereof to the upper upright portion (30), and with a lower end thereof to the lower upright portion (29), so as to be stretched and adhered to the upright (6) in the elongated position and so as to be loosened and usable as a strap when the upright (6) is in the shortened position.

7. A scooter (1) according to any one of the preceding claims, wherein:
- the upright (6) forms a battery housing (36) or a battery coupling interface (36) for a mechanical and electrical connection of a battery (37) to the electric scooter (1) at the front frame end (5) and at the lower upright end (8),
- an electric actuation motor (38) is arranged at the rear frame end (4) or integrated into the rear wheel (12),
- when the upright (6) is tilted on the frame (2), at least part of the battery (37) and/or of the battery housing (36) extends into the open gap (39) of the treadable surface (15).

8. A scooter (1) according to claims 6 and 7, wherein, in the transport configuration of the electric scooter (1), the handle (34) is positioned in a region half way between the front wheel (10) and the rear wheel (12) and on an outer side of a stack consisting of said upper and lower upright portions (30, 29), telescopically overlapping each other, the frame (2) and the battery (37).

9. A scooter (1) according to any one of the preceding claims, wherein an assembly of the upright (6) and the front wheel (10) is rotatable with respect to the frame (2) about an upright tilting axis (40) spaced apart from the front rotation axis (11) in a direction of the frame (2), so that the tilting of the upright (6) on the frame (2) moves the front wheel (10) towards an upper side and towards a central region of the frame (2).

10. A scooter (1) according to any one of the preceding claims, wherein:
- the handlebar (16) comprises two elongated half-handlebars (43), each having a first free end and a second end rotatably connected to a central handlebar portion (44) about a handlebar folding axis (45) to allow the handlebar (16) to fold between a spread apart position of use and a brought together transport position,
- each of the two half-handlebars (43) is adjustable in length, and/or in the transport configuration of the electric scooter (1), the half-handlebars (43) are arranged on two opposite sides of the rear wheel (12) and accommodate the rear wheel (12) therebetween.

11. A scooter (1) according to any one of the preceding claims, wherein the rear wheel (12) is mounted to a wheel support (48) tiltably connected to the frame (2) about an oscillation axis (49), parallel to the rear rotation axis (13) and spaced apart from the rear rotation axis (13) towards the front frame end (5), so as to allow a movement of the wheel support (48) along with the rear wheel (12) from a position of use towards an upper side of the frame (2) and towards a central region of the frame (2) in a raised transport position.

12. A scooter (1) according to claim 11, wherein the wheel support (48) is connected to the upright (6) by means of a transmission mechanism (50), so that the tilting of the upright (6) on the frame (2) moves the rear wheel (12) from the position of use thereof to the raised transport position thereof.

13. A scooter (1) according to any one of the preceding claims, comprising:
- a release mechanism (28) with a release member (54) which is operable by the user and in functional connection with one or more stop members configured to lock the electric scooter (1) in the configuration of use and releasable by actuating the release member (54) to allow a conversion of the electric scooter (1) from the use configuration to the transport configuration,
- a hooking mechanism (56) configured to lock the electric scooter (1) in the compact transport configuration, and releasable to allow a conversion of the electric scooter (1) from the transport configuration back to the configuration of use.

## Patentansprüche

1. Klappbarer elektrischer Roller (1), umfassend:
- einen Rahmen (2), welcher sich entlang einer longitudinalen Achse (3) des elektrischen Rollers (1) von einem hinteren Rahmenende (4) zu einem vorderen Rahmenende (5) erstreckt,
- einen länglichen Pfosten (6), welcher mit dem Rahmen (2) verbunden ist und sich entlang einer Pfostenachse (7) von einem unteren Pfostenende (8), welches an dem vorderen Rahmenende (5) angeordnet ist, zu einem freien oberen Pfostenende (9) erstreckt,
- ein Vorderrad (10), welches an dem unteren Pfostenende (8) angeordnet ist und sich um eine vordere Drehachse (11) dreht, welche transversal zu der longitudinalen Achse (3) und zu der Pfostenachse (7) ist,
- ein Hinterrad (12), welches an dem hinteren Rahmenende (4) angeordnet ist und sich um eine hintere Drehachse (13) dreht, welche transversal zu der longitudinalen Achse (3) und zu der Pfostenachse (7) ist,
- eine Plattform (14), welche mit dem Rahmen (2) verbunden ist und eine trittfeste Fläche (15) bildet, welche sich zwischen dem Vorderrad (10) und dem Hinterrad (12) erstreckt, um einen Benutzer zu tragen, welcher auf der Plattform (14) steht,
- eine Lenkstange (16), welche mit dem Pfosten (6) verbunden ist und einen oder mehrere Greifabschnitte (17) bildet, welche durch den Benutzer greifbar sind,
wobei der Pfosten (6) in Bezug auf den Rahmen (2) zwischen einer nicht geklappten Gebrauchskonfiguration, in welcher die Pfostenachse (7) gemeinsam eine Pfostenführungsebene (18) definierend transversal zu der longitudinalen Achse (3) orientiert ist, und einer kompakten Transportkonfiguration gekippt werden kann, in welcher der Pfosten (6) an den Rahmen (2) geklappt ist, wobei sich die Pfostenachse (7) von dem Vorderrad (10) in Richtung des Hinterrads (12) erstreckt,
wobei die Plattform (14) in Bezug auf den Rahmen (2) zwischen einer Gebrauchsposition, welche transversal zu der Führungsebene (18) expandiert ist, und einer Transportposition nahe oder parallel zu der Führungsebene (18) gekippt werden kann,
**dadurch gekennzeichnet, dass,** wenn die Plattform (14) von der Gebrauchsposition in die Transportposition gekippt wird, die Plattform (14) einen Spalt (39) in der trittfesten Fläche (15) zwischen dem Vorderrad (10) und dem Hinterrad (12) öffnet, welcher wenigstens einen Abschnitt des in die Transportkonfiguration gekippten Pfostens (6) aufnimmt.

2. Roller (1) nach Anspruch 1, wobei die Plattform (14) zwei längliche Platten (19) umfasst, welche beide mit dem Rahmen (2) verbunden sind und sich in Bezug auf den Rahmen (2) um jeweilige Plattformdrehachsen (23) drehen.

3. Roller (1) nach Anspruch 2, wobei:
- der Rahmen (2) zwei parallele longitudinale Wände (20) umfasst, welche voneinander beabstandet sowie gegenseitig zugewandt sind und sich in der Richtung der longitudinalen Achse (3) erstrecken,
- jede der beiden länglichen Platten (19) an jeweils einer der longitudinalen Wände (20) an einem oberen Rand (24) der longitudinalen Wand (20) angelenkt ist und einen äußeren Plattenabschnitt (21) und einen inneren Plattenabschnitt (22) bildet, welcher sich an zwei entgegengesetzten Seiten in Bezug auf die Plattformdrehachse (23) der Platte (19) erstreckt,
- in der expandierten Gebrauchsposition die beiden Platten (19) gegenseitig an der gleichen Halterungsebene ausgerichtet sind und gemeinsam die trittfeste Fläche (15) bilden, welche einer oberen Seite des elektrischen Rollers (1) zugewandt ist,
- in der Transportposition die beiden Platten (19) nebeneinander angeordnet sind und an zu der Halterungsebene transversalen und voneinander beabstandeten Ebenen oder an zu der Führungsebene (18) parallelen Ebenen orientiert sind,
- in der expandierten Gebrauchsposition die inneren Abschnitte (22) der Platten (19) einen Raum (25) zwischen den beiden longitudinalen Wänden (20) von oberhalb schließen und in der Transportposition die inneren Abschnitte (22) der Platten (19) den Spalt (39) in der trittfesten Fläche (15) öffnen, um zu ermöglichen, dass Teile des Pfostens (6) wenigstens teilweise in dem Raum (25) aufgenommen sind.

4. Roller (1) nach Anspruch 3, wobei die Platten (19) der Plattform (14) durch eine Gegendrehung der äußeren Abschnitte (21) davon nach oben und in Richtung zueinander und der inneren Abschnitte (22) davon nach unten und voneinander weg von der Gebrauchsposition in die Transportposition gekippt werden können, so dass sich der Spalt (39) nach unten und in der gleichen Kipprichtung wie der des Pfostens (6) an dem Rahmen (2) öffnet.

5. Roller (1) nach einem der vorhergehenden Ansprüche, wobei:
- der Pfosten (6) einen unteren Pfostenabschnitt (29), welcher das Vorderrad (10) haltert, und einen oberen Pfostenabschnitt (30) umfasst, welcher die Lenkstange (16) haltert,
- der untere Pfostenabschnitt (29) Pfostenabschnitt (29) und der obere Pfostenabschnitt (30) in einer verschiebbaren Weise miteinander verbunden sind, um die Einstellung der Länge des Pfostens (6) und eine Bewegung davon zwischen einer verlängerten Gebrauchsposition und einer verkürzten Transportposition zu ermöglichen,
- der Pfosten (6) eine Aussparung (31) bildet, welche in der Richtung des Rahmens (2) offen ist und welche wenigstens einen Teil des Hinterrads (12) oder des Rahmens (2) aufnimmt, wenn der Pfosten (6) an den Rahmen (2) in die Transportkonfiguration gekippt ist.

6. Roller (1) nach Anspruch 5, wobei der Pfosten (6) einen Griff (34) für ein manuelles Transportieren des elektrischen Rollers (1) bildet und/oder der elektrische Roller (1) einen flexiblen Gurt (35) umfasst, welcher mit einem oberen Ende davon mit dem oberen Pfostenabschnitt (30) und mit einem unteren Ende davon mit dem unteren Pfostenabschnitt (29) verbunden ist, um in der verlängerten Position gedehnt und an dem Pfosten (6) gehalten zu sein und um gelockert und als ein Riemen verwendbar zu sein, wenn der Pfosten (6) in der verkürzten Position ist.

7. Roller (1) nach einem der vorhergehenden Ansprüche, wobei:
- der Pfosten (6) ein Batteriegehäuse (36) oder eine Batteriekopplungsschnittstelle (36) für eine mechanische und elektrische Verbindung einer Batterie (37) mit dem elektrischen Roller (1) an dem vorderen Rahmenende (5) und an dem unteren Pfostenende (8) bildet,
- ein elektrischer Antriebsmotor (38) an dem hinteren Rahmenende (4) angeordnet ist oder in dem Hinterrad (12) integriert ist,
- wenn der Pfosten (6) an den Rahmen (2) gekippt ist, sich wenigstens ein Teil der Batterie (37) und/oder des Batteriegehäuses (36) in den offenen Spalt (39) der trittfesten Fläche (15) erstreckt.

8. Roller (1) nach den Ansprüchen 6 und 7, wobei in der Transportkonfiguration des elektrischen Rollers (1) der Griff (34) in einem Bereich auf halbem Wege zwischen dem Vorderrad (10) und dem Hinterrad (12) und an einer äußeren Seite eines Stapels positioniert ist, welcher aus dem oberen und dem unteren Pfostenabschnitt (30, 29), welche einander teleskopisch überlappen, dem Rahmen (2) und der Batterie (37) besteht.

9. Roller (1) nach einem der vorhergehenden Ansprüche, wobei eine Anordnung aus dem Pfosten (6) und dem Vorderrad (10) in Bezug auf den Rahmen (2) um eine Pfostenkippachse (40) drehbar ist, welche in einer Richtung des Rahmens (2) von der vorderen Drehachse (11) beabstandet ist, so dass das Kippen des Pfostens (6) an den Rahmen (2) das Vorderrad (10) in Richtung einer oberen Seite und in Richtung eines zentralen Bereichs des Rahmens (2) bewegt.

10. Roller (1) nach einem der vorhergehenden Ansprüche, wobei:
- die Lenkstange (16) zwei längliche Halb-Lenkstangen (43) umfasst, von welchen jede ein erstes freies Ende und ein zweites Ende aufweist, welches um eine Lenkstangenklappachse (45) drehbar mit einem zentralen Lenkstangenabschnitt (44) verbunden ist, um zu ermöglichen, dass die Lenkstange (16) zwischen einer auseinandergespreizten Gebrauchsposition und einer zusammengebrachten Transportposition geklappt wird,
- jede der beiden Halb-Lenkstangen (43) in ihrer Länge einstellbar ist und/oder in der Transportkonfiguration des elektrischen Rollers (1) die Halb-Lenkstangen (43) an zwei entgegengesetzten Seiten des Hinterrads (12) angeordnet sind und das Hinterrad (12) dazwischen aufnehmen.

11. Roller (1) nach einem der vorhergehenden Ansprüche, wobei das Hinterrad (12) an einer Radhalterung (48) montiert ist, welche um eine Oszillationsachse (49) kippbar ist, die parallel zu der hinteren Drehachse (13) ist und in Richtung des vorderen Rahmenendes (5) von der hinteren Drehachse (13) beabstandet ist, um eine Bewegung der Radhalterung (48) zusammen mit dem Hinterrad (12) von einer Gebrauchsposition in Richtung einer oberen Seite des Rahmens (2) und in Richtung eines zentralen Bereichs des Rahmens (2) in eine erhöhte Transportposition zu ermöglichen.

12. Roller (1) nach Anspruch 11, wobei die Radhalterung (48) mittels eines Übertragungsmechanismus (50) mit dem Pfosten (6) verbunden ist, so dass das Kippen des Pfostens (6) an den Rahmen (2) das Hinterrad (12) von der Gebrauchsposition davon in die erhöhte Transportposition davon bewegt.

13. Roller (1) nach einem der vorhergehenden Ansprüche, umfassend:
- einen Freigabemechanismus (28) mit einem Freigabeelement (54), welches durch den Benutzer betätigbar ist und in funktionaler Verbindung mit einem oder mehreren Stoppelementen ist, welche dazu eingerichtet sind, den elektrischen Roller (1) in der Gebrauchskonfiguration zu verriegeln, und welche durch ein Betätigen des Freigabeelements (54) lösbar sind, um eine Konvertierung des elektrischen Rollers (1) von der Gebrauchskonfiguration in die Transportkonfiguration zu ermöglichen,
- einen Einhakmechanismus (56), welcher dazu eingerichtet ist, den elektrischen Roller (1) in der kompakten Transportkonfiguration zu verriegeln, und welcher lösbar ist, um eine Konvertierung des elektrischen Rollers (1) von der Transportkonfiguration zurück in die Gebrauchskonfiguration zu ermöglichen.

## Revendications

1. Trottinette électrique pliable (1) comprenant :
- un cadre (2) s'étendant le long d'un axe longitudinal (3) de la trottinette électrique (1) d'une extrémité de cadre arrière (4) à une extrémité de cadre avant (5),
- un montant allongé (6), relié au cadre (2) et s'étendant le long d'un axe de montant (7) d'une extrémité de montant inférieure (8), agencée au niveau de l'extrémité de cadre avant (5), à une extrémité de montant supérieure libre (9),
- une roue avant (10) agencée au niveau de l'extrémité de montant inférieure (8) et tournant autour d'un axe de rotation avant (11) transversal à l'axe longitudinal (3) et à l'axe de montant (7),
- une roue arrière (12) agencée au niveau de l'extrémité de cadre arrière (4) et tournant autour d'un axe de rotation arrière (13) transversal à l'axe longitudinal (3) et à l'axe de montant (7),
- une plateforme (14) reliée au cadre (2) et formant une surface sur laquelle on peut marcher (15) s'étendant entre la roue avant (10) et la roue arrière (12) pour supporter un utilisateur se tenant sur la plateforme (14),
- un guidon (16) relié au montant (6) et formant une ou plusieurs portions de préhension (17) qui peuvent être saisies par l'utilisateur,
dans laquelle le montant (6) peut être incliné par rapport au cadre (2) entre une configuration d'utilisation dépliée, dans laquelle l'axe de montant (7) est orienté transversalement à l'axe longitudinal (3), définissant conjointement un plan de guidage de montant (18), et une configuration de transport compacte, dans laquelle le montant (6) est plié sur le cadre (2) avec l'axe de montant (7) s'étendant de la roue avant (10) vers la roue arrière (12),
dans laquelle la plateforme (14) peut être inclinée par rapport au cadre (2) entre une position d'utilisation étendue transversalement au plan de guidage (18) et une position de transport proche ou parallèle au plan de guidage (18),
**caractérisée en ce que,** lors de l'inclinaison de la plateforme (14) de la position d'utilisation à la position de transport, la plateforme (14) ouvre un dégagement (39) dans la surface sur laquelle on peut marcher (15) entre la roue avant (10) et la roue arrière (12), qui accueillie au moins une portion du montant (6) incliné dans la configuration de transport.

2. Trottinette (1) selon la revendication 1, dans laquelle la plateforme (14) comprend deux plaques allongées (19), toutes les deux reliées au cadre (2) et tournant par rapport au cadre (2) autour d'axes de rotation (23) de plateforme respectifs.

3. Trottinette (1) selon la revendication 2, dans laquelle :
- le cadre (2) comprend deux parois longitudinales (20) parallèles qui sont espacées l'une de l'autre et se font mutuellement face, et s'étendant dans la direction de l'axe longitudinal (3),
- chacune des deux plaques allongées (19) s'articule sur l'une des parois longitudinales (20), respectivement, au niveau d'un bord supérieur (24) de la paroi longitudinale (20) et forme une portion plaque extérieure (21) et une portion plaque intérieure (22) s'étendant sur deux côtés opposés par rapport à l'axe de rotation (23) de plateforme de la plaque (19),
- dans la position d'utilisation étendue, les deux plaques (19) sont mutuellement alignées sur le même plan de support et forment conjointement la surface sur laquelle on peut marcher (15) faisant face à un côté supérieur de la trottinette électrique (1),
- dans la position de transport, les deux plaques (19) sont agencées l'une à côté de l'autre et orientées sur des plans transversaux au plan de support et espacées l'une de l'autre, ou sur des plans parallèles au plan de guidage (18),
- dans la position d'utilisation étendue, les portions intérieures (22) des plaques (19) ferment un espace (25) par au-dessus entre les deux parois longitudinales (20) et, dans la position de transport, les portions intérieures (22) des plaques (19) ouvrent ledit dégagement (39) dans la surface sur laquelle on peut marcher (15) pour permettre à des parties du montant (6) d'être au moins partiellement accueillies dans l'espace (25).

4. Trottinette (1) selon la revendication 3, dans laquelle les plaques (19) de la plateforme (14) peuvent être inclinées de la position d'utilisation à la position de transport par une contre-rotation des portions extérieures (21) de celles-ci vers le haut et l'une vers l'autre, et des portions intérieures (22) de celles-ci vers le bas et loin l'une de l'autre, de telle sorte que le dégagement (39) s'ouvre vers le bas et dans la même direction d'inclinaison que celle du montant (6) sur le cadre (2).

5. Trottinette (1) selon l'une des revendications précédentes, dans laquelle :
- le montant (6) comprend une portion de montant inférieure (29) qui supporte la roue avant (10), et une portion de montant supérieure (30) qui supporte le guidon (16),
- la portion de montant inférieure (29) et la portion de montant supérieure (30) sont reliées l'une à l'autre d'une manière translatable pour permettre le réglage de la longueur du montant (6) et un déplacement de celui-ci entre une position d'utilisation allongée et une position de transport raccourcie,
- le montant (6) forme un évidement (31), qui est ouvert dans la direction du cadre (2) et qui accueille au moins une partie de la roue arrière (12) ou du cadre (2) lorsque le montant (6) est incliné sur le cadre (2) dans la configuration de transport.

6. Trottinette (1) selon la revendication 5, dans laquelle le montant (6) forme une poignée (34) pour transporter manuellement la trottinette électrique (1) et/ou la trottinette électrique (1) comprend une sangle flexible (35) reliée par une extrémité supérieure de celle-ci à la portion de montant supérieure (30), et par une extrémité inférieure de celle-ci à la portion de montant inférieure (29), de manière à être étirée et à adhérer au montant (6) dans la position allongée et de manière à être relâchée et utilisable comme dragonne lorsque le montant (6) est dans la position raccourcie.

7. Trottinette (1) selon l'une quelconque des revendications précédentes, dans laquelle :
- le montant (6) forme un boîtier (36) de batterie ou une interface de couplage (36) de batterie pour une liaison mécanique et électrique d'une batterie (37) à la trottinette électrique (1) au niveau de l'extrémité de cadre avant (5) et au niveau de l'extrémité de montant inférieure (8),
- un moteur d'actionnement électrique (38) est agencé au niveau de l'extrémité de cadre arrière (4) ou intégré dans la roue arrière (12),
- lorsque le montant (6) est incliné sur le cadre (2), au moins une partie de la batterie (37) et/ou du boîtier (36) de batterie s'étend dans le dégagement ouvert (39) de la surface sur laquelle on peut marcher (15).

8. Trottinette (1) selon les revendications 6 et 7, dans laquelle, dans la configuration de transport de la trottinette électrique (1), la poignée (34) est positionnée dans une région à mi-chemin entre la roue avant (10) et la roue arrière (12) et sur un côté extérieur d'un empilement consistant en lesdites portions de montant supérieure et inférieure (30, 29), se chevauchant télescopiquement, le cadre (2) et la batterie (37).

9. Trottinette (1) selon l'une quelconque des revendications précédentes, dans laquelle un ensemble du montant (6) et de la roue avant (10) peut tourner par rapport au cadre (2) autour d'un axe d'inclinaison de montant (40) espacé de l'axe de rotation avant (11) dans une direction du cadre (2), de telle sorte que l'inclinaison du montant (6) sur le cadre (2) déplace la roue avant (10) vers un côté supérieur et vers une région centrale du cadre (2).

10. Trottinette (1) selon l'une quelconque des revendications précédentes, dans laquelle :
- le guidon (16) comprend deux demi-guidons allongés (43), présentant chacun une première extrémité libre et une deuxième extrémité libre reliées de manière rotative à une portion centrale de guidon (44) autour d'un axe de pliage de guidon (45) pour permettre au guidon (16) de se plier entre une position d'utilisation écartée et une position de transport rapprochée,
- chacun des deux demi-guidons (43) peut être réglé en longueur, et/ou dans la configuration de transport de la trottinette électrique (1), les demi-guidons (43) sont agencés sur deux côtés opposés de la roue arrière (12) et accueillent la roue arrière (12) entre eux.

11. Trottinette (1) selon l'une quelconque des revendications précédentes, dans laquelle la roue arrière (12) est montée sur un support de roue (48) relié de manière inclinée au cadre (2) autour d'un axe d'oscillation (49), parallèle à l'axe de rotation arrière (13) et espacé de l'axe de rotation arrière (13) vers l'extrémité de cadre avant (5), de manière à permettre un déplacement du support de roue (48) avec la roue arrière (12) d'une position d'utilisation vers un côté supérieur du cadre (2) et vers une région centrale du cadre (2) dans une position de transport levée.

12. Trottinette (1) selon la revendication 11, dans laquelle le support de roue (48) est relié au montant (6) à l'aide d'un mécanisme de transmission (50), de telle sorte que l'inclinaison du montant (6) sur le cadre (2) déplace la roue arrière (12) de la position d'utilisation de celle-ci à la position de transport levée de celle-ci.

13. Trottinette (1) selon l'une quelconque des revendications précédentes, comprenant :
- un mécanisme de libération (28) doté d'un élément de libération (54) qui est actionnable par l'utilisateur et en liaison fonctionnelle avec un ou plusieurs éléments d'arrêt configurés pour bloquer la trottinette électrique (1) dans la configuration d'utilisation et libérables en actionnant l'élément de libération (54) pour permettre une conversion de la trottinette électrique (1) de la configuration d'utilisation à la configuration de transport,
- un mécanisme d'accrochage (56) configuré pour bloquer la trottinette électrique (1) dans la configuration de transport compacte, et libérable pour permettre une conversion de la trottinette électrique (1) de la configuration de transport de retour dans la configuration d'utilisation.
